Europäisches Patentamt

European Patent Office

Office européen des brevets

(11) Veröffentlichungsnummer: **0 348 818**
**A2**

## (12) EUROPÄISCHE PATENTANMELDUNG

(21) Anmeldenummer: 89111356.5

(22) Anmeldetag: 22.06.89

(51) Int. Cl.⁴: **B60C 23/04**

(30) Priorität: 27.06.88 DE 3821608

(43) Veröffentlichungstag der Anmeldung:
03.01.90 Patentblatt 90/01

(84) Benannte Vertragsstaaten:
DE ES FR GB IT SE

(71) Anmelder: Bayerische Motoren Werke
Aktiengesellschaft
Patentabteilung AJ-3 Postfach 40 02 40
Petuelring 130
D-8000 München 40(DE)

(72) Erfinder: Weishaupt, Walter
Am Wismat 28
D-8000 München 60(DE)
Erfinder: Ramboeck, Josef
Linnenbrüggerstrasse 31
D-8000 München 82(DE)

(54) Schaltungsanordnung zur Übertragung mindestens eines veränderlichen Messwertes von jeweils einem der Räder eines Fahrzeuges zu einer zentralen Überwachungseinheit.

(57) Bei einer Schaltungsanordnung zur Übertragung mindestens eines veränderlichen Meßwertes von jeweils einem der Räder eines Fahrzeuges zu einer zentralen Überwachungseinheit (1), bei der von einer am Fahrzeugrad angeordneten Übertragerspule (3) ein vom Ausgangssignal eines Meßwertgebers abhängiges Informationssignal zu einer fahrzeugfesten Übertragerspule (6) übertragen und von dort der zentralen Überwachungseinheit (1) zugeführt wird, ist eine separate Referenzspule (10) zur Erfassung von das Informationssignal verfälschenden elektromagnetischen Störfeldern vorgesehen.

EP 0 348 818 A2

## Schaltungsanordnung zur Übertragung mindestens eines veränderlichen Meßwertes von jeweils einem der Räder eines Fahrzeuges zu einer zentralen Überwachungseinheit.

Die Erfindung betrifft eine Schaltungsanordnung zur Übertragung mindestens eines veränderlichen Meßwertes von jeweils einem der Räder eines Fahrzeuges zu einer zentralen Überwachungseinheit, bei der von einer am Fahrzeugrad angeordneten Übertragerspule ein vom Ausgangssignal eines Meßwertgebers abhängiges Informationssignal zu einer fahrzeugfesten Übertragerspule übertragen und von dort der zentralen Überwachungseinheit zugeführt wird.

Eine derartige Schaltungsanordnung ist bereits aus der DE-PS 30 29 563 bekannt. Bei dieser bekannten Schaltungsanordnung wird zur Energieversorgung des Meßwertgebers periodisch jeweils ein Energieversorgungssignal, beispielsweise ein Rechteckspannungssignal vorgegebener Dauer von der fahrzeugfesten Übertragerspule über einen Luftspalt zur am Fahrzeugrad angeordneten Übertragerspule übertragen. In den Pausen zwischen den Energieversorgungssignalen wird das jeweils aktuelle Informationssignal von der am Fahrzeugrad angeordneten Übertragerspule zur fahrzeugfesten Übertragerspule übertragen und von dort der zentralen Überwachungseinheit zugeführt.

Bei dieser bekannten Schaltungsanordnung können bei starken elektromagnetischen Störfeldern Fehler bei der Übertragung des Informationssignals vom Meßwertgeber zur zentralen Überwachungseinheit auftreten. Diese sind darauf zurückzuführen, daß insbesondere die fahrzeugfeste Übertragerspule bedingt durch den relativ großen Luftspalt zwischen den beiden Übertragerspulen als elektromagnetische Antenne wirkt und damit nicht nur das Informationssignal, sondern auch externe elektromagnetische Störfelder empfängt.

Es ist daher Aufgabe der Erfindung, eine Schaltungsanordnung eingangs genannter Art zu schaffen, bei der auch bei starken elektromagnetischen Störfeldern keine Falschmeldungen von der zentralen Überwachungseinheit ausgelöst werden.

Diese Aufgabe wird erfindungsgemäß dadurch gelöst, daß eine separate Referenzspule zur Erfassung von das Informationssignal verfälschenden elektromagnetischen Störfeldern vorgesehen ist.

Wenn in der vom Radübertrager unabhängigen Referenzspule aufgrund eines externen elektromagnetischen Störfeldes ein Störsignal induziert wird, kann im einfachsten Falle in der zentralen Überwachungseinheit die Auslösung einer Falschmeldung unterdrückt werden, die durch das auch von der fahrzeugfesten Übertragerspule empfangene elektromagnetische Störfeld hervorgerufen wurde. Ein solches elektromagnetisches Störfeld kann beispielsweise durch einen Radiosender erzeugt werden.

Eine grundlegende Verbesserung dieser Schaltungsanordnung wird nach einer Weiterbildung der Erfindung durch eine Kompensationseinrichtung erreicht. In dieser wird das bei einem elektromagnetischen Störfeld in der Referenzspule induzierte Störsignal von dem in der fahrzeugfesten Übertragerspule insgesamt induzierten Signal subtrahiert. Da sich dieses Signal bei einem elektromagnetischen Störfeld aus dem eigentlichen Informationssignal vom Meßwertgeber und dem in der fahrzeugfesten Übertragerspule induzierten Störsignal zusammensetzt, wird durch die Subtraktion des in der Referenzspule induzierten Störsignals das das Informationssignal überlagernde Störsignal "herausgefiltert". Der zentralen Überwachungseinheit wird dann das von der Störsignalkomponente befreite Informationssignal zugeführt.

Diese Subtraktion des in der Referenzspule induzierten Störsignals vom störsignalbehafteten Informationssignal wird in einfacher Weise durch Addition des invertierten Störsignales der Referenzspule zum störsignalbehafteten Informationssignal erreicht.

Um eine optimale Kompensation des Störsignals zu erreichen, ist es erforderlich, daß die Referenzspule räumlich so am Fahrzeug angeordnet ist, daß sie eine zur Magnetfeldempfindlichkeit der fahrzeugfesten Übertragerspule proportionale Magnetfeldempfindlichkeit hat. In diesem Falle kann bei entsprechender Verstärkung des in der Referenzspule induzierten Störsignals das in der fahrzeugfesten Übertragerspule induzierte Störsignal im gesamten auftretenden Frequenzspektrum der Störfelder vollständig kompensiert werden.

Im Idealfall hat die Referenzspule dieselbe Magnetfeldempfindlichkeit wie die fahrzeugfeste Übertragerspule. In diesem Falle wird kein das in der Referenzspule induzierte Störsignal verstärkender Verstärker benötigt.

Für den Fall, daß bei der erfindungsgemäßen Schaltungsanordnung zur Energieversorgung des Meßwertgebers periodisch jeweils ein Energieversorgungssignal vorgegebener Dauer zur am Fahrzeugrad angeordneten Übertragerspule übertragen wird und daß in den Pausen zwischen den Energieversorgungssignalen das jeweils aktuelle Informationssignal zur fahrzeugfesten Übertragerspule übertragen wird, ist gemäß einer Weiterbildung der Erfindung ein Zeitglied vorgesehen, das unabhängig vom Ende eines Energieversorgungssignals nach einer bestimmten, im Vergleich zur Dauer des Energieversorgungssignals größeren Zeitdauer nach dem Einsatz des Energieversorgungssignals die Übertragung des gerade aktuellen Informationssignals auslöst.

Bei einer derart arbeitenden Schaltungsanordnung wird, für den Fall, daß kein elektromagnetisches Störfeld vorhanden ist, die Übertragung des jeweiligen Informationssignals durch das Ende des unmittelbar vorausgehenden Energieversorgungssignals ausgelöst. Wenn aber ein so starkes elektromagnetisches Störfeld vorliegt, daß die Steuerschaltung des Meßwertgebers das in der am Fahrzeugrad angeordneten Übertragerspule induzierte Störsignal als Energiesignal interpretiert, wird die Übertragung des Informationssignales zur zentralen Überwachungseinheit verhindert, da die Steuerschaltung des Meßwertgebers kein Ende des letzten Energieversorgungssignales erkennen kann. Um dennoch die Übertragung von Meßwerten in Form des jeweils aktuellen Informationssignals zu ermöglichen, wird die Übertragung des gerade aktuellen Informationssignals unabhängig vom Ende eines Energieversorgungssignals nach einer bestimmten Zeitdauer nach dem Beginn des letzten Energieversorgungssignals durch das Zeitglied ausgelöst.

Vorzugsweise wird das Zeitglied nach einer Informationssignalübertragung durch den ersten Impuls des nächstfolgenden Energieversorgungssignals bzw. durch einen etwaigen vor diesem auftretenden Störimpuls getriggert.

Es hat sich ferner als vorteilhaft erwiesen, die durch das Zeitglied bestimmte Zeitspanne etwa doppelt so groß wie die Dauer eines Energieversorgungssignals zu wählen.

Im folgenden wird die Erfindung anhand der Figuren näher erläutert. Es zeigen:

Fig. 1 ein Blockschaltbild eines für ein Fahrzeugrad dargestellten elektromagnetischen Übertragersystems,

Fig. 2 ein Blockschaltbild der zentralen Überwachungseinheit des elektromagnetischen Übertragersystems von Fig. 1,

Fig. 3 ein Blockschaltbild der am Fahrzeugrad angeordneten Meß- und Sendeschaltung des elektromagnetischen Übertragersystems von Fig. 1 und

Fig. 4 ein Zeitdiagram zur Erläuterung der Funktionsweise des elektromagnetischen Übertragersystems von Fig. 1.

Der Übersichtlichkeit halber werden bei der folgenden Beschreibung der Figuren gleiche Teile mit gleichen Bezugzeichen versehen.

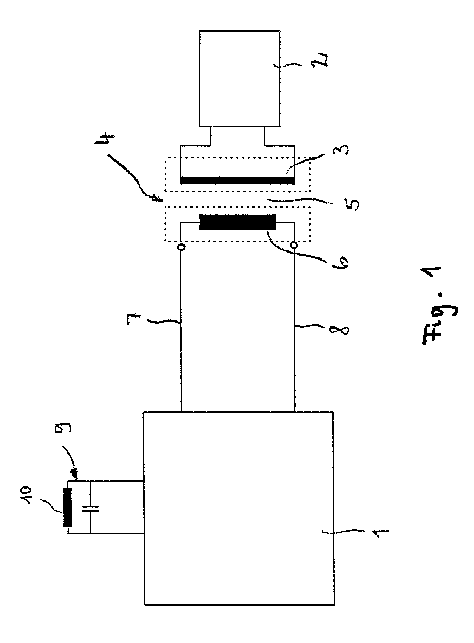

Das in der Fig. 1 dargestellte elektromagnetische Übertragersystem dient zur Übertragung des Luftdrucks und der Lufttemperatur in einem Fahrzeugreifen zu einer im Fahrzeug angeordneten zentralen Überwachungseinheit 1. Die veränderlichen Meßwerte für den Luftdruck und die Lufttemperatur im Reifen werden von einer am Fahrzeugrad angeordneten Meß- und Sendeschaltung 2 erfaßt und in Form eines auf elektromagnetischem Wege übertragbaren Informationssignals zunächst der am Fahrzeugrad angeordneten Übertragerspule 3 des Luftübertragers 4 zugeführt. Dieses Informationssignal wird zur Überwindung des Luftspaltes 5 auf elektromagnetischem Wege zur fahrzeugfesten Übertragerspule 6 des Luftübertragers 4 übertragen. Von dort gelangt das Informationssignal über die elektrischen Leitungen 7 und 8 zur zentralen Überwachungseinheit 1.

Für die Funktionsweise der Meß- und Sendeschaltung 2 ist es erforderlich, daß diese vom Fahrzeug aus mit Energie versorgt wird. Dazu wird von der zentralen Überwachungseinheit 1 periodisch jeweils ein Energieversorgungssignal vorgegebener Dauer zur am Fahrzeugrad angeordneten Übertragerspule 3 übertragen. Die im Energieversorgungssignal enthaltene Energie wird in der Meß- und Sendeschaltung 2 kurzzeitig gespeichert, so daß mit der gespeicherten Energie in den Pausen zwischen den Energieversorgungssignalen das jeweils aktuelle Informationssignal zur fahrzeugfesten Übertragerspule 6 übertragen werden kann.

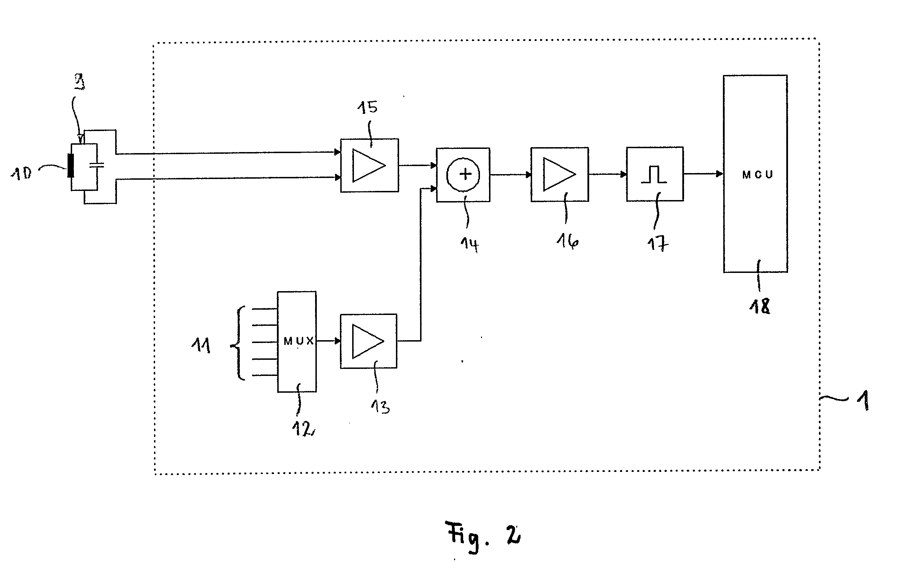

Da die fahrzeugfeste Übertragerspule 6 des Luftübertragers 4 als elektromagnetische Antenne wirkt, werden von ihr außer dem Informationssignal von der Meß- und Sendeschaltung 2 auch beispielsweise von Radiosendern verursachte elektromagnetische Störfelder empfangen. Diese führen dazu, daß das Informationssignal von der Meß- und Sendeschaltung 2 durch ein Störsignal überlagert wird, wodurch in der zentralen Überwachungseinheit 1 leicht Falschmeldungen ausgelöst werden können. Um dies zu verhindern, ist die zentrale Überwachungseinheit 1 an einen auf die Arbeitsfrequenz des elektromagnetischen Übertragers abgestimmten Resonanzschwingkreis 9 angeschlossen. Dieser enthält eine ebenfalls als Antenne wirkende Referenzspule 10, durch die ein das Informationssignal verfälschendes elektromagnetisches Störfeld erfaßt wird. Wird ein solches elektromagnetisches Störfeld festgestellt, dann wird in der zentralen Überwachungseinheit 1 im einfachsten Falle eine durch das störsignalbehaftete Informationssignal fälschlicherweise ausgelöste Fehlermeldung unterdrückt. Bei einer verbesserten Ausführung der Erfindung wird das das Informationssignal verfälschende Störsignal kompensiert. Dies soll anhand der Fig. 2 erläutert werden. Die zentrale Überwachungseinheit 1 erhält an einem ihrer Multiplexereingänge 11 das störsignalbehaftete Informationssignal von der Meß- und Sendeschaltung 2 (Fig. 1). Dieses störsignalbehaftete Informationssignal wird vom Multiplexer 12 einem ersten Vorverstärker 13 und von dort dem einen Eingang eines Addierers 14 zugeführt. Dem anderen Eingang des Addierers 14 wird das in der Referenzspule 10 induzierte Störsignal über einen zweiten Vorverstärker 15 zugeführt. Wichtig ist, daß das in der Referenzspule 10 induzierte Störsignal mit im Vergleich zum in der fahrzeugfesten Übertragerspule 6 (Fig. 1) induzierten Störsignal entgegengesetzter Polarität dem Addierer 14 zugeführt wird. Dies wird entweder durch Vertauschen der Anschlüsse der Referenzspule 10 oder durch eine Inversion des Störsignals im Vorverstärker 15 erreicht.

Wenn die Referenzspule 10 räumlich so am Fahrzeug (nicht dargestellt) angeordnet ist, daß sie eine zur Magnetfeldempfindlichkeit der fahrzeugfesten Übertragerspule 6 (Fig. 1) proportionale Magnetfeldempfindlichkeit hat, dann kann das störsignalbehaftete Informationssignal durch Subtraktion des in der Referenzspule 10 induzierten Störsignals vollständig von seiner Störsignalkomponente befreit werden. Das störsignalfreie Informationssignal wird dann vom Ausgang des Addierers 14 über einen Verstärker 16 und über eine Impulsformerstufe 17 dem Mikroprozessor 18 der zentralen Überwachungseinheit 1 zugeführt. Durch die Kompensation der Störsignalkomponente des der zentralen Überwachungseinheit 1 zugeführten störsignalbehafteten Informationssignals ist selbst bei starken elektromagnetischen Störfeldern eine fehlerfreie Funktion einer derartigen Reifenfülldrucküberwachungseinrichtung gewährleistet.

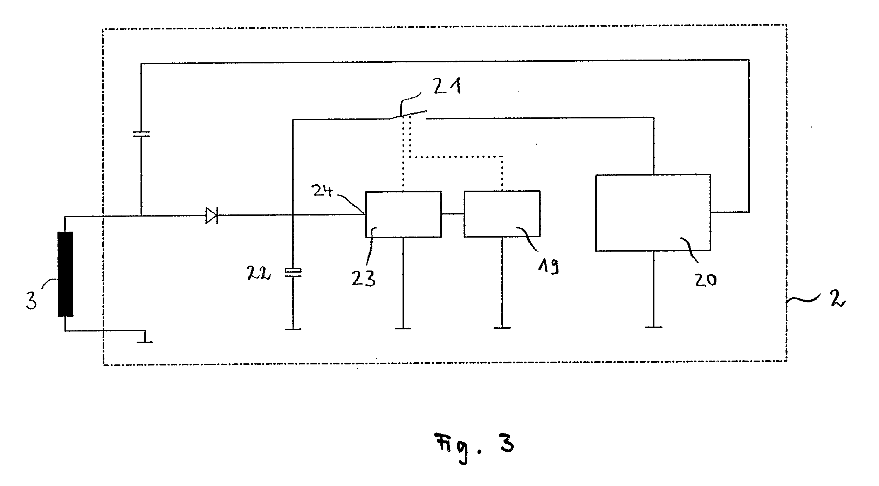

Wie bereits vorstehend dargelegt, wird bei dem in Fig. 1 dargestellten elektromagnetischen Übertragersystem zur Energieversorgung der Meß- und Sendeschaltung 2 von der zentralen Überwachungseinheit 1 periodisch jeweils ein Energieversorgungssignal vorgegebener Dauer zur am Fahrzeugrad angeordneten Übertragerspule 3 übertragen. In den Pausen zwischen den Energieversorgungssignalen erfolgt dann die Übertragung des jeweils aktuellen Informationssignals von der Meß- und Sendeschaltung 2 zur fahrzeugfesten Übertragerspule 6. Bei diesem elektromagnetischen Übertragersystem wird die Übertragung des gerade aktuellen Informationssignals durch das Ende des unmittelbar vorhergehenden Energieversorgungssignals ausgelöst. Diese Auslösung der Übertragung des gerade aktuellen Informationssignals wird jedoch bei einem starken elektromagnetischen Störfeld verhindert, da die Meß- und Sendeschaltung 2 das in der am Fahrzeugrad angeordneten Übertragerspule 3 induzierte Störsignal fälschlicherweise als Energieversorgungssignal interpretiert. Um dennoch nach einer angemessenen Zeit eine Übertragung des gerade aktuellen Informationssignals zu gewährleisten, ist in der in Fig. 3 in Form eines Blockschaltbildes dargestellten Meß- und Sendeschaltung 2 ein Zeitglied 19 vorgesehen, das unabhängig vom Ende eines Energieversorgungssignals nach einer bestimmten, im Vergleich zur Dauer des Energieversorgungssignals größeren Zeitdauer nach dem Einsatz des Energieversorgungssignals die Übertragung des gerade aktuellen Informationssignals auslöst. Wie der Fig. 3 zu entnehmen ist, kann ein in der Meß- und Sendeschaltung 2 enthaltener Meßwertgeber 20 mit Hilfe eines steuerbaren Schalters 21 mit einer Spannungsversorgungseinrichtung 22 verbunden werden. Der Schalter 21 ist dabei sowohl durch das Zeitglied 19 als auch durch eine Steuerschaltung 23 steuerbar. Die Steuerschaltung 23 erkennt anhand der ihr über den Eingang 24 zugeführten Energieversorgungssignale, wann das zuletzt übertragene Energieversorgungssignal beendet wird. Zu diesem Zeitpunkt schließt sie den steuerbaren Schalter 21 und legt dadurch den Meßwertgeber 20 an Spannung, wodurch die Übertragung des gerade aktuellen Informationssignals ausgelöst wird. Für den Fall, daß die Steuerschaltung 23 das Ende des letzten Energieversorgungssignals nicht erkennen konnte, weil es das in der am Fahrzeugrad angeordneten Spule 3 induzierte Störsignal noch als Energieversorgungssignal interpretiert, löst das Zeitglied 19 durch Schließen des Schalters 21 unabhängig vom Ende des letzten Energieversorgungssignals nach einer bestimmten Zeitdauer nach dem Einsatz des Energieversorgungssignals die Übertragung des gerade aktuellen Informationssignals aus.

Das Zeitglied 19 wird nach einer Informationssignalübertragung vorzugsweise durch den ersten Impuls des nächstfolgenden Energieversorgungssignals bzw. durch einen etwaigen vor diesem auftretenden Störimpuls getriggert.

Es hat sich als günstig erwiesen, wenn die durch das Zeitglied bestimmte Zeitspanne etwa zweimal so groß ist wie die Dauer eines Energieversorgungssignals.

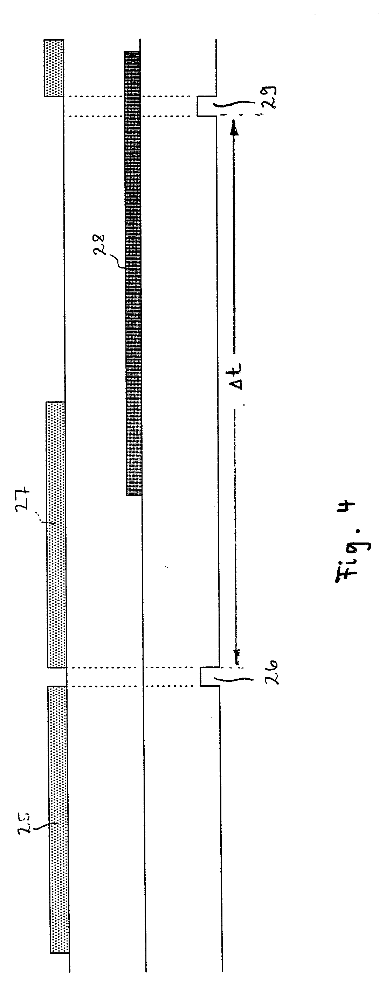

Wie aus der Fig. 4 zu entnehmen ist, wird unmittelbar nach dem Ende eines ersten Energieversorgungssignals 25 durch die Steuerschaltung 23 (Fig. 3) die Übertragung des gerade aktuellen Informationssignals 26 ausgelöst. Unmittelbar nach dem Ende der Übertragung des Informationssignals 26 wird erneut ein Energieversorgungssignal 27 von der zentralen Überwachungseinheit 1 (Fig. 1) zur Meß- und Sendeschaltung 2 (Fig. 1) übertragen. Wenn, wie im in Fig. 4 dargestellten Falle, am Ende des Energieversorgungssignales 27 aufgrund eines starken elektromagnetischen Störfeldes in der am Fahrzeugrad angeordneten Übertragerspule 3 ein dem Energiesignal 27 entsprechendes bzw. ähnliches Störsignal induziert wird, kann am Ende des Energieversorgungssignales 27 die Übertragung des gerade aktuellen Informationssignals durch die Steuerschaltung 23 nicht ausgelöst werden, da diese das Ende des Energieversorgungssignales 27 nicht erkennt. In einem solchen Falle wird die Übertragung des Informationssignales 29 nach Ablauf der Zeitdauer $\Delta$ t nach dem Beginn des Energieversorgungssignals 27 ausgelöst. Es ist dadurch gewährleistet, daß selbst bei einem starken elektromagnetischen Störfeld jeweils nach einer vorgegebenen Zeitdauer nach Beginn des letzten Energieversorgungssignals die Übertragung des gerade aktuellen Informationssignals ausgelöst wird. Auf diese Weise wird ein unangemessen langer Ausfall von Meßdaten verhindert.

**Ansprüche**

1. Schaltungsanordung zur Übertragung mindestens eines veränderlichen Meßwertes von jeweils einem der Räder eines Fahrzeuges zu einer zentralen Überwachungseinheit, bei der von einer am Fahrzeugrad angeordneten Übertragerspule ein vom Ausgangssignal eines Meßwertgebers abhängiges Informationssignal zu einer fahrzeugfesten Übertragerspule übertragen und von dort der zentralen Überwachungseinheit zugeführt wird, **dadurch gekennzeichnet,** daß eine separate Referenzspule (10) zur Erfassung von das Informationssignal verfälschenden elektromagnetischen Störfeldern vorgesehen ist.

2. Schaltungsanordnung nach Anspruch 1, dadurch gekennzeichnet, daß eine Kompensationseinrichtung (14) vorgesehen ist, in der das in der Referenzspule bei einem elektromagnetischen Störfeld induzierte Störsignal von dem mit dem in der fahrzeugfesten Übertragerspule induzierten Störsignal überlagerten Informationssignal subtrahiert wird.

3. Schaltungsanordnung nach Anspruch 1 oder 2, dadurch gekennzeichnet, daß die Referenzspule (10) räumlich so am Fahrzeug angeordnet ist, daß sie eine zur Magnetfeldempfindlichkeit der fahrzeugfesten Übertragerspule (6) proportionale Magnetfeldempfindlichkeit hat.

4. Schaltungsanordnung nach Anspruch 3, dadurch gekennzeichnet, daß die Referenzspule (10) dieselbe Magnetfeldempfindlichkeit wie die fahrzeugfeste Übertragerspule (6) hat.

5. Schaltungsanordnung nach einem der vorhergehenden Ansprüche, bei der zur Energieversorgung des Meßwertgebers periodisch jeweils ein Energieversorgungssignal vorgegebener Dauer zur am Fahrzeugrad angeordneten Übertragerspule übertragen wird und bei der in den Pausen zwischen den Energieversorgungssignalen das jeweils aktuelle Informationssignal zur fahrzeugfesten Übertragerspule übertragen wird, dadurch gekennzeichnet, daß ein Zeitglied (10) vorgesehen ist, das unabhängig vom Ende eines Energieversorgungssignals nach einer bestimmten, im Vergleich zur Dauer des Energieversorgungssignals größeren Zeitdauer nach dem Einsatz des Energieversorgungssignals die Übertragung des gerade aktuellen Informationssignals auslöst.

6. Schaltungsanordnung nach Anspruch 5, dadurch gekennzeichnet, daß das Zeitglied (19) nach einer Informationssignalübertragung durch den ersten Impuls des nächstfolgenden Energieversorgungssignals bzw. durch einen etwaigen vor diesem auftretenden Störimpuls getriggert wird.

7. Schaltungsanordnung nach Anspruch 5 oder 6, dadurch gekennzeichnet, daß die durch das Zeitglied (19) bestimmte Zeitdauer etwa zweimal so groß ist wie die Dauer eines Energieversorgungssignals.

Fig. 1

EP 0 348 818 A2

2

15

10

MUX

11

12

13

14

16

17

MCU

18

1

Fig. 2

EP 0 348 818 A2

Fig. 3

Fig. 4

EP 0 348 818 A2